# DEMANDE DE BREVET EUROPEEN

(11) **EP 1 211 125 A1**
(43) Date de publication de la demande: **05.06.2002**
(21) Numéro de dépôt: 01402638.9
(22) Date de dépôt: 11.10.2001
(51) Int. Cl.: B60N 2/36, B60N 2/30

(54) **Agencemet d'un ensemble de sièges dans un habitacle de véhicule automobile**

(30) Priorité: 29.11.2000 FR 0015437
(71) Demandeur: Peugeot Citroen Automobiles SA, 92200 Neuilly sur Seine (FR)
(72) Inventeur: Devaux, Daniel, 77183 Croissy Beaubourg (FR)
(74) Mandataire: Lanceplaine, Jean-Claude

(57) **Abrégé**

L'invention concerne un agencement d'un ensemble de sièges dans un habitacle de véhicule automobile, du type comprenant, sur un plancher (3) de ce véhicule, trois rangées de sièges. La rangée de sièges intermédiaires est déplaçable entre une position d'utilisation et une position repliée par le rabattement du dossier (22a) sur l'assise (21a) et basculée sensiblement verticalement derrière la rangée de sièges avant. L'assise (41a) et le dossier (42a) de chaque siège (40a) de la rangée de sièges arrière sont déplaçables par basculement entre une position d'utilisation et une position escamotée respectivement au-dessous de l'assise de la rangée de sièges intermédiaires et au-dessous de l'assise de la rangée de sièges arrière.

## Description

La présente invention concerne un agencement d'un ensemble de sièges dans un habitacle de véhicule automobile.

Certains types de véhicules automobiles sont équipés, derrière la rangée de sièges avant, d'une ou de plusieurs rangées de sièges qui sont modulables de façon à adapter l'habitabilité du véhicule en fonction du nombre de passager et/ou des charges à transporter.

Pour cela, on connaît des sièges qui sont conçus pour pouvoir basculer l'assise derrière la rangée de sièges située devant et rabattre le dossier de façon à augmenter le volume de chargement.

Mais, les solutions utilisées jusqu'à présent ne permettent pas, par des manoeuvres simples et sans effort important, de replier les sièges et d'obtenir un plancher de chargement continu et plat.

On connaît également des sièges démontables qui peuvent être enlevés pour agrandir le volume de chargement.

Le principal inconvénient de cette solution réside dans la nécessité du démontage.

En effet, il faut libérer les différents sièges de leur ancrage sur le plancher du véhicule et ranger les sièges démontés, en dehors du véhicule, dans. des locaux. Lorsque l'on a besoin d'une place de passager supplémentaire, il faut de nouveau rechercher le siège et procéder à son remontage. Ainsi, l'adaptation de l'espace interne du véhicule en fonction de son utilisation nécessite un temps de préparation et des efforts importants.

De plus, en milieu urbain, le possesseur d'un tel véhicule ne dispose pas toujours d'un local permettant le stockage des sièges enlevés.

L'invention a pour but d'éviter ces inconvénients en proposant un agencement de sièges dans un habitacle de véhicule automobile permettant, sans enlèvement de siège et en effectuant des manoeuvres simples, de moduler le nombre de places en fonction des passagers ainsi que le volume de chargement selon les charges à transporter.

L'invention a donc pour objet un agencement d'un ensemble de sièges dans un habitacle de véhicule automobile, du type comprenant, sur un plancher de ce véhicule, trois rangées de sièges, une rangée de sièges avant, une rangée de sièges intermédiaires et une rangée de sièges arrière, chaque rangée comprenant au moins deux sièges formés chacun par une assise et un dossier, caractérisé en ce que la rangée de sièges intermédiaires est déplaçable entre une position d'utilisation et une position repliée par le rabattement du dossier sur l'assise et basculée sensiblement verticalement derrière la rangée de sièges avant, en ce que l'assise de chaque siège de la rangée de sièges arrière est déplaçable par basculement entre une position d'utilisation et une position escamotée dans un logement ménagé dans le plancher au-dessous de la rangée de sièges intermédiaires et en ce que le dossier de chaque siège de ladite rangée de sièges arrière est déplaçable par pivotement entre une position d'utilisation et une position escamotée dans un logement ménagé dans le plancher au-dessous de l'assise du siège correspondant de ladite rangée de sièges arrière.

Selon d'autres caractéristiques de l'invention :
- l'assise et le dossier de chaque siège de la rangée de sièges arrière forment, dans la position escamotée, une partie de la surface du plancher permettant de placer au moins une partie de la rangée de sièges intermédiaires en position d'utilisation,
- l'assise et le dossier de la rangée de sièges intermédiaires forment deux portions de siège indépendantes et déplaçables chacune entre ladite position d'utilisation et ladite position basculée, chaque dossier étant monté articulé à sa partie inférieure sur l'assise correspondante et chaque assise étant reliée au plancher par un mécanisme de pivotement,
- le mécanisme de pivotement de chaque portion de siège est formé par au moins une bielle dont une première extrémité est montée articulée à l'avant de l'assise de ladite portion de siège et dont une seconde extrémité est montée articulée sur le plancher du véhicule,
- chaque portion de siège de la rangée de sièges intermédiaires représente sensiblement la moitié de ladite rangée de sièges intermédiaires,
- l'une desdites portions de siège de la rangée de sièges intermédiaires représente sensiblement le tiers de ladite rangée de sièges intermédiaires et l'autre desdites portions représente sensiblement les deux tiers de cette rangée de sièges intermédiaires,
- le dossier de chaque siège de la rangée de sièges arrière est monté articulé, à sa partie inférieure, sur le plancher du véhicule,
- l'assise de chaque siège de la rangée de sièges arrière est reliée au plancher par un mécanisme à bascule comprenant au moins une bielle dont une première extrémité est montée articulée à l'avant de l'assise correspondante et dont une seconde extrémité est montée articulée sur ledit plancher du véhicule,
- l'assise du siège de la rangée de sièges arrière située derrière la portion de siège représentant les deux tiers de la rangée de sièges intermédiaires est reliée au plancher par un mécanisme à bascule comprenant au moins une bielle dont une première extrémité est montée articulée à l'avant de ladite assise et dont une seconde extrémité est montée articulée sur ledit plancher du véhicule,
- l'assise du siège de la rangée de sièges arrière située derrière la portion de siège représentant sensiblement le tiers de la rangée de sièges intermédiaires est reliée au plancher par un mécanisme à bascule comprenant au moins une bielle dont une première extrémité est montée articulée à l'avant de ladite assise et dont une seconde extrémité est montée articulée sur ledit plancher au moyen d'un système à axe transversal autorisant une translation latérale de ladite assise et un positionnement dans l'axe longitudinal de ladite portion de la rangée de sièges intermédiaires.

D'autres caractéristiques et avantages de l'invention apparaîtront au cours de la description qui va suivre, donnée à titre d'exemple et faite en se référant aux dessins annexés, sur lesquels :
- La Fig. 1 est une vue schématique en élévation d'un habitacle de véhicule automobile dans lequel sont agencés des sièges selon un premier mode de réalisation de l'invention,
- la Fig. 2 est une vue schématique de dessus montrant l'agencement des sièges en position d'utilisation,,
- les Figs. 3 à 6 sont des vues schématiques montrant les différents agencements possibles,
- la Fig. 7 est une vue schématique de dessus d'un habitacle de véhicule automobile dans lequel sont agencés des sièges selon un second mode de réalisation de l'invention,
- la Fig. 8 est une vue de dessus de l'habitacle représenté à la Fig. 7 et montrant la position des sièges de la rangée de sièges arrière rabattus,
- la Fig. 9 est une vue de détails du mécanisme à bascule d'un sièges de la rangée de sièges arrière.

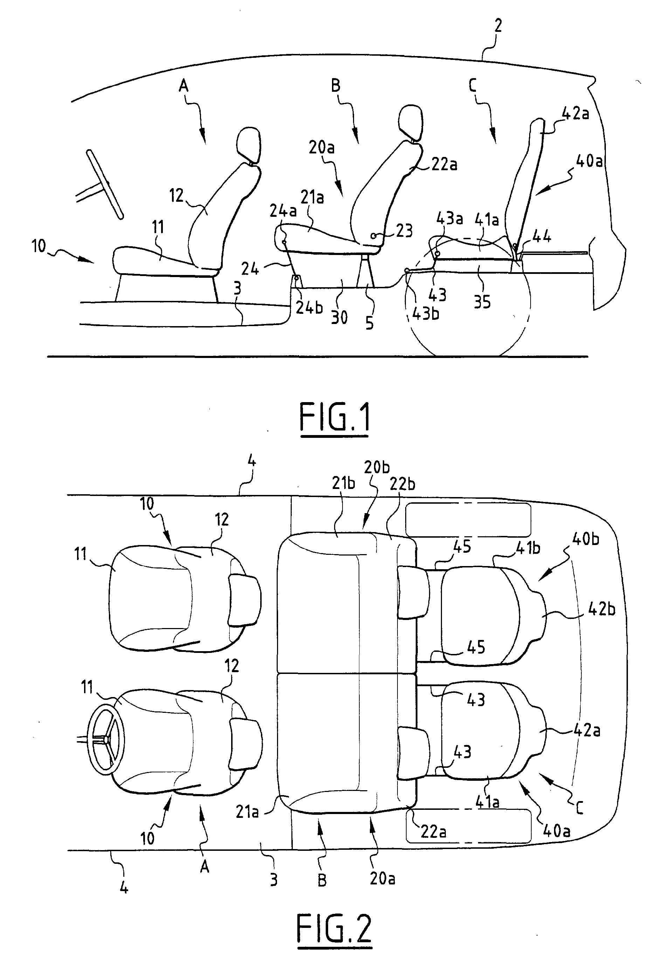

Sur les Figs. 1 et 2, on a représenté schématiquement un véhicule automobile comportant une carrosserie 1 dont on a montré une partie du pavillon 2 et une partie du plancher 3 reliés entre eux par des montants latéraux 4.

Le véhicule représenté sur ces figures est du type "monospace" comportant, dans le sens de la marche du véhicule, trois rangées de sièges, une rangée de sièges avant A, une rangée de sièges intermédiaires B et une rangée de sièges arrière C. Chaque rangée de sièges A, B et C comprend au moins deux sièges formés chacun par une assise et un dossier.

Dans l'exemple de réalisation représenté sur les Figs. 1 à 6, la rangée de sièges avant A se compose de deux sièges 10 comprenant chacun une assise 11 et un dossier 12.

La rangée de sièges intermédiaires B pouvant recevoir trois passagers est composée de deux portions de siège 20a et 20b comprenant chacune une assise, respectivement 21a et 21b, et un dossier, respectivement 22a et 22b.

Dans l'exemple de réalisation représenté sur les Figs. 1 à 6, chaque portion de siège 20a et 20b de la rangée de sièges intermédiaires B représente sensiblement la moitié de ladite rangée de sièges intermédiaires.

Chaque dossier 22a et 22b est monté articulé sur l'assise correspondante 21a et 21b au moyen d'un axe d'articulation 23 horizontal de façon à pouvoir replier chaque dossier sur l'assise correspondante.

Par ailleurs, chaque assise 21a et 21b de la portion de siège correspondante 20a et 20b est reliée au plancher 3 du véhicule automobile par un mécanisme de pivotement qui, dans l'exemple de réalisation représenté sur les figures, est constitué par au moins une bielle 24 (Fig. 1) pour l'assise 21a et 21b de chaque portion de siège 20a et 20b. De préférence, chaque assise 21a et 21b est reliée au plancher 3 par deux bielles 24 s'étendant parallèlement l'une par rapport à l'autre.

Chaque bielle 24 comporte une première extrémité 24a montée articulée à l'avant de l'assise 21a ou 21b correspondante et une seconde extrémité 24b montée articulée sur le plancher 3 du véhicule automobile.

En position d'utilisation, comme représentée à la Fig. 1, les assises 21a et 21b des portions de siège 20a et 20b reposent sur le plancher 3 du véhicule au moyen de pieds 5. Ce plancher 3 du véhicule comporte, au-dessous des assises 21a et 21b des portions de siège 20a et 20b, un logement 30.

La rangée de sièges arrière C est formée de deux sièges indépendants 40a et 40b comprenant chacun une assise, respectivement 41a et 41b, et un dossier, respectivement 42a ou 42b.

Chaque assise 41a ou 41b est indépendante du dossier 42a ou 42b correspondant et l'assise 41a ou 41b est reliée au plancher 3 du véhicule par un mécanisme à bascule comprenant au moins une bielle 43.

Dans l'exemple de réalisation représenté sur les figures, chaque assise 41a ou 41b est reliée au plancher 3 par deux bielles 43 (Fig. 2) dont une première extrémité 43a est montée articulée à l'avant de l'assise 41a ou 41b correspondante et dont une seconde extrémité 43b est montée articulée sur le plancher 3. Le dossier 42a et 42b de chaque siège 40a et 40b est monté articulé, à sa partie inférieure sur le plancher 3 du véhicule au moyen d'un axe d'articulation 44 horizontal et s'étendant transversalement par rapport à l'axe longitudinal du véhicule automobile.

Le plancher 3 comporte, au-dessous de chaque assise 41a et 41b du siège 40a et 40b, un logement 35.

Les rangées de sièges respectivement intermédiaires B et arrière C sont escamotables indépendamment les unes des autres et les portions de siège 20a et 20b et les sièges 40a et 40b sont également escamotables indépendamment les uns des autres pour moduler les places en fonction du nombre de passagers à transporter et adapter la surface de chargement du plancher 3 du véhicule automobile en fonction des charges à transporter.

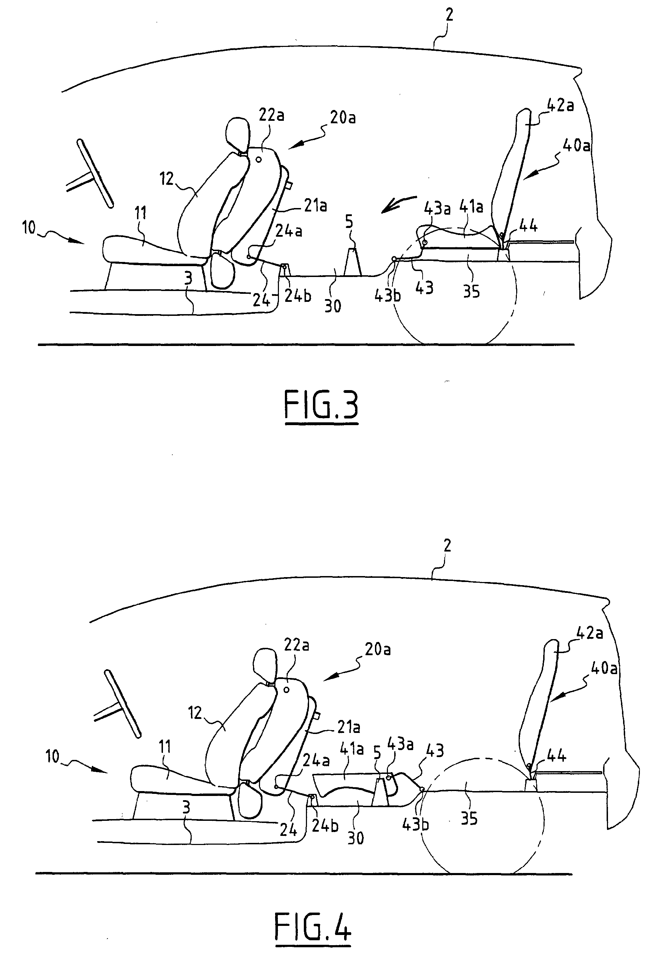

Pour escamoter une des portions de siège de la rangée de sièges intermédiaires B, comme par exemple la portion de siège 20a, il suffit à l'utilisateur de faire pivoter le dossier 22a autour de l'axe d'articulation 23 pour le replier sur l'assise 21a et de faire basculer la portion de siège 20a à l'aide des bielles 24 de façon à placer ladite portion de siège 20a en position escamotée sensiblement verticalement derrière le siège 10 de la rangée de sièges avant A, ainsi que représentée à la Fig. 3.

Pour escamoter l'autre portion de siège 20b, l'utilisateur procède de la même manière.

Pour escamoter l'un des sièges 40a ou 40b de la rangée de sièges arrière C, comme par exemple le siège 40a, l'utilisateur, après avoir escamoté la portion de siège 20a, bascule l'assise 41a en la faisant pivoter par l'intermédiaire des bielles 43 de sa position d'utilisation représentée à la Fig. 3 dans sa position escamotée représentée à la fig. 4.

Lors de ce basculement, l'assise 41a pivote sensiblement de 180° et vient se placer dans le logement 30 de telle manière que sa matelassure soit dirigée vers le fond de ce logement 30 afin d'être protégée de toute salissure.

Ensuite, l'utilisateur bascule le dossier 42a en le faisant pivoter d'environ 90° autour de l'axe d'articulation 44.

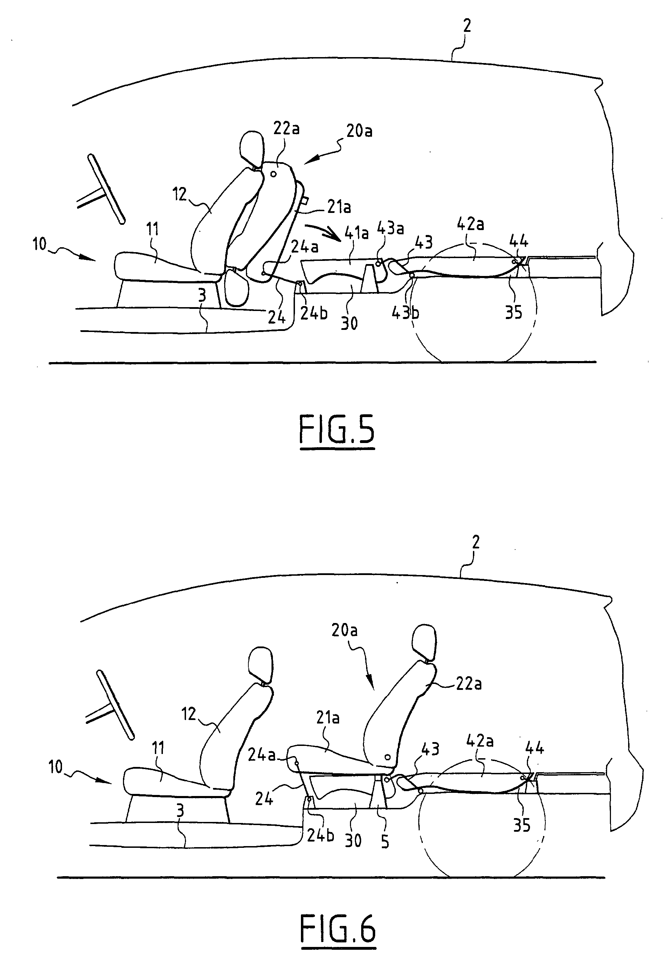

Ce dossier vient se placer dans le logement 35, ainsi que représenté à la Fig. 5, de telle manière que sa matelassure soit dirigée vers le fond de ce logement 35 de façon à être protégée également de toute salissure.

Pour escamoter le siège 40b, l'utilisateur procède de la même manière.

En position escamotée, comme représentée à la Fig. 5, la ou les assises 41a et 41b ainsi que le ou les dossiers 42a et 42b forment une partie de la surface du plancher 3 du véhicule automobile.

Cette disposition permet également de pouvoir replacer la ou les portions des siège 20a et 20b de la rangée de sièges intermédiaires C, en position d'utilisation, ainsi que représentée à la Fig. 6 pour transporter trois, quatre ou cinq passagers, tout en disposant derrière la rangée de sièges intermédiaires B d'une surface de chargement importante.

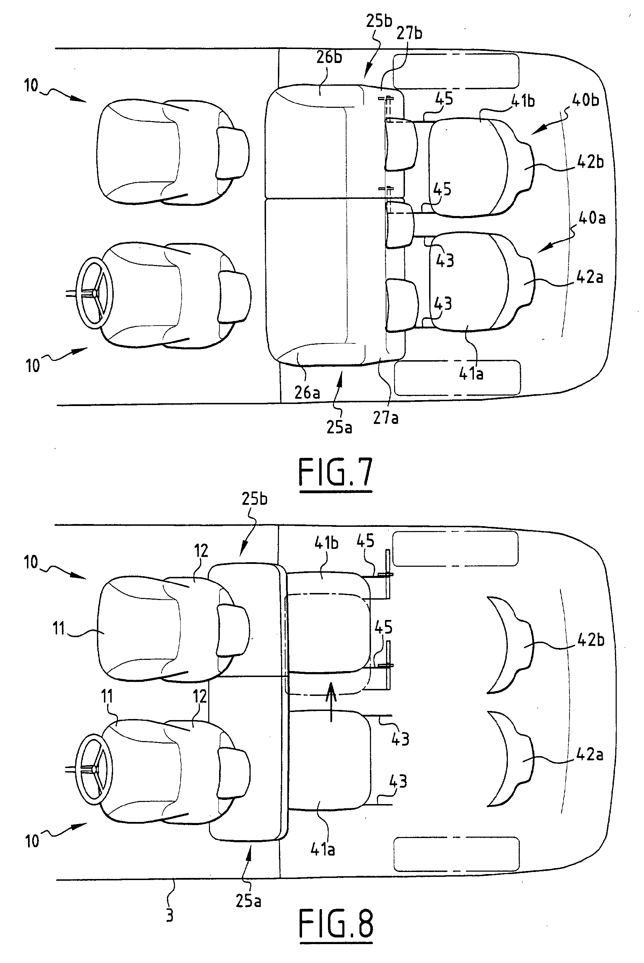

Dans l'exemple de réalisation représenté à la Fig. 7, la rangée de sièges intermédiaires B est divisée en deux portions 25a et 25b comportant chacune une assise, respectivement 26a et 26b, et un dossier, respectivement 27a et 27b.

Dans ce mode de réalisation, la portion de siège 25a représente sensiblement les deux tiers de la rangée de sièges intermédiaires C et la portion de siège 25b représente sensiblement le tiers de ladite rangée de sièges intermédiaires B.

Ces portions de siège 25a et 25b sont escamotables de la même façon que les portions de siège 20a et 20b du précédent mode de réalisation.

Dans ce cas, le basculement de l'assise 41b du siège 40b de la rangée de sièges arrière C interfère avec la portion de siège 25a qui représente les deux tiers de la largeur totale de la rangée de sièges intermédiaires C, ainsi que représenté à la Fig. 7.

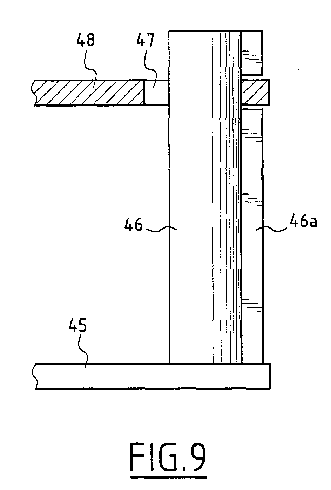

L'assise 41b du siège 40b est reliée au plancher 3 par un mécanisme à bascule comprenant au moins une bielle 45 (Figs. 8 et 9) dont une première extrémité 45a est montée articulée à l'avant de l'assise 41b et dont une seconde extrémité 45b est montée articulée sur ledit plancher 3 au moyen d'un système à axe transversal 46 autorisant une translation latérale de l'assise 41b pour la positionner dans l'axe longitudinal de la portion de siège 25b de la rangée de sièges intermédiaires C.

Ainsi, pour escamoter l'assise 41b, l'utilisateur dans un premier temps fait pivoter cette assise 41b par l'intermédiaire des bielles 45 dans la position représentée en pointillés sur la Fig. 8, et ensuite déplace transversalement cette assise 41b pour l'amener dans le logement 35 situé dans l'axe longitudinal de la portion de siège 25b, comme représenté en trait plein à la Fig. 8.

Pour cela et ainsi que représenté à la Fig. 9, l'axe transversal 46 comporte un cran 46a qui empêche toute translation latérale de l'assise 41b dans sa position d'utilisation et qui après pivotement de ladite assise 41b se trouve en vis à vis d'une encoche 47 ménagée dans un support 48 solidaire du plancher 3 du véhicule automobile ce qui permet un déplacement transversal de ladite assise 41b et son positionnement dans le logement 35.

L'agencement selon l'invention offre, en outre, la possibilité de pouvoir disposer d'un plancher de chargement plat et de grande surface, tout en protégeant la matelassure des sièges escamotés, et également de pouvoir repositionner les sièges de la rangée de sièges intermédiaires pour utiliser le véhicule en configuration de cinq places avec un plancher arrière plat.

Cet agencement permet donc, sans enlèvement de sièges et en effectuant des manoeuvres simples, de pouvoir moduler le nombre de places en fonction des passagers ainsi que le volume de chargement selon les charges à transporter.

## Revendications

1. Agencement d'un ensemble de sièges dans un habitacle de véhicule automobile, du type comprenant, sur un plancher (3) de ce véhicule, trois rangées de sièges, une rangée de sièges avant, une rangée de sièges intermédiaires et une rangée de sièges arrière, chaque rangée comprenant au moins deux sièges (10 ; 20a, 20b ; 25a, 25b ; 40a, 40b) formés chacun par une assise (11 ; 21a, 21b ; 26a, 26b ; 41a, 41b) et un dossier (12 ; 22a, 22b ; 27a, 27b; 42a, 42b), **caractérisé en ce que** la rangée de sièges intermédiaires est déplaçable entre une position d'utilisation et une position repliée par le rabattement du dossier (22a, 22b ; 27a ; 27b) sur l'assise (21a, 21b ; 26a, 26b) et basculée sensiblement verticalement derrière la rangée de sièges avant, **en ce que** l'assise (41a, 41b) de chaque siège (40a, 40b) de la rangée de sièges arrière est déplaçable par basculement entre une position d'utilisation et une position escamotée dans un logement (30) ménagé dans le plancher (3) au-dessous de la rangée de sièges intermédiaires et **en ce que** le dossier (42a, 42b) de chaque siège (40a, 40b) de ladite rangée de sièges arrière est déplaçable par pivotement entre une position d'utilisation et une position escamotée dans un logement (35) ménagé au-dessous de l'assise (41a, 41b) du siège (40a, 40b) correspondant de ladite rangée de sièges arrière.

2. Agencement selon la revendication 1, **caractérisé en ce que** l'assise (41, 41b) et le dossier (42a, 42b) de chaque siège (40a, 40b) de la rangée de sièges arrière forment, dans la position escamotée, une partie de la surface du plancher (3) permettant de placer au moins une partie de là rangée de sièges intermédiaires en position d'utilisation.

3. Agencement selon la revendication 1, **caractérisé en ce que** l'assise (21a, 21b ; 26a, 26b) et le dossier (22a, 22b ; 27a, 27b) de la rangée de sièges intermédiaires forment deux portions de siège (20a, 20b, 25a, 25b) indépendantes et déplaçables chacune entre ladite position d'utilisation et ladite position basculée, chaque dossier (22a, 22b ; 27a, 27b) étant monté articulé à sa partie inférieure sur l'assise (21a, 21b ; 26a, 26b) correspondante et chaque assise (21a, 21b ; 26a, 26b) étant reliée au plancher (3) par un mécanisme de pivotement (24).

4. Agencement selon la revendication 3, **caractérisé en ce que** le mécanisme de pivotement de chaque portion de siège (20a, 20b ; 25a, 25b) est formé par au moins une bielle (24) dont une première extrémité (24a) est montée articulée à l'avant de l'assise (21a, 21b) de ladite portion de siège (20a, 20b ; 25a, 25b) et dont une seconde extrémité (24b) est montée articulée sur le plancher (3) du véhicule automobile.

5. Agencement selon la revendication 3 ou 4, **caractérisé en ce que** chaque portion de siège (20a, 20b) de la rangée de sièges intermédiaires représente sensiblement la moitié de ladite rangée de sièges intermédiaires.

6. Agencement selon la revendication 3 ou 4, **caractérisé en ce que** l'une (25a) desdites portions de siège de la rangée de sièges intermédiaires représente sensiblement les deux tiers de ladite rangée de sièges intermédiaires et l'autre (25b) représente sensiblement le tiers de cette rangée de sièges intermédiaires.

7. Agencement selon l'une quelconque des revendications précédentes, **caractérisé en ce que** le dossier (42a, 42b) de chaque siège (40a, 40b) de la rangée de sièges arrière est monté articulé à sa partie inférieure sur le plancher (3) du véhicule automobile.

8. Agencement selon l'une quelconque des revendications 1 à 5, **caractérisé en ce que** l'assise (41a, 41b) de chaque siège (40a, 40b) de la rangée de sièges arrière est reliée au plancher par un mécanisme à bascule comprenant au moins une bielle (43) dont une première extrémité (43a) est montée articulée à l'avant de l'assise (41a, 41b) correspondante et dont une seconde extrémité (43b) est montée articulée sur ledit plancher (3) dudit véhicule automobile.

9. Agencement selon l'une quelconque des revendications 1 à 4 ou 6, **caractérisé en ce que** l'assise (41a) du siège (40a) de la rangée de sièges arrière située derrière la portion de siège (25a) représentant les deux tiers de la rangée de sièges intermédiaires est reliée au plancher (3) par un mécanisme à bascule comprenant au moins une bielle (43) dont une première extrémité (43a) est montée articulée à l'avant de ladite assise (41a) et dont une seconde extrémité (43b) est montée articulée sur ledit plancher (3) dudit véhicule automobile.

10. Agencement selon l'une quelconque des revendications 1 à 4 ou 6, **caractérisé en ce que** l'assise (41b) du siège (40b) de la rangée de sièges arrière située derrière la portion de siège (25b) représentant sensiblement le tiers de la rangée de sièges intermédiaires est reliée au plancher par un mécanisme à bascule comprenant au moins une bielle (45) dont une première extrémité (45a) est montée articulée à l'avant de ladite assise (41b) et dont une seconde extrémité (45b) est montée articulée sur ledit plancher (3) au moyen d'un système à axe transversal (46) autorisant une translation latérale de ladite assise (41b) et un positionnement dans l'axe longitudinal de ladite portion (25b) de la rangée de sièges intermédiaires.
